# EUROPEAN PATENT SPECIFICATION

(11) **EP 0 368 554 B1**
(45) Date of publication and mention of the grant of the patent: **27.07.1994**
(21) Application number: 89311326.6
(22) Date of filing: 01.11.1989
(51) Int. Cl.: G02F 1/137

(54) **Twisted nematic liquid crystal display device**
Verdrillt-nematische Flüssigkristall-Anzeigevorrichtung
Dispositif d'affichage comprenant un cristal liquide nématique torsadé

(30) Priority: 11.11.1988 JP 283760/88
(43) Date of publication of application: 16.05.1990
(73) Proprietor: International Business Machines Corporation, Armonk, N.Y. 10504 (US)
(72) Inventor: Suzuki, Shunji, Yokohama-shi Kanagawa-ken (JP)
(74) Representative: Burt, Roger James, Dr.

(56) References cited:
- EP-A- 0 259 822
- EP-A- 0 266 184

## Description

The present invention relates to a so-called "normally black" type twisted nematic liquid crystal display device in which a liquid crystal is subjected to twisted orientation by 90° so that, when a voltage is not applied to the liquid crystal, light is not able to pass through it.

In a "normally black" type twisted nematic liquid crystal display device, a liquid crystal layer, the major axes of the molecules of which are subjected to twisted orientation by 90°, is placed between a first transparent electrode subjected to orientation treatment in a first direction and a second transparent electrode subjected to orientation treatment in a second direction perpendicular to the first direction. A first transparent polarizing plate having a direction of polarization coinciding with the first direction is provided outside the first electrode and a second transparent polarizing plate also having a direction of polarization coinciding with the first direction is provided outside the second electrode. When a voltage is not applied between the first and second electrodes, light is not able to pass through the liquid crystal layer due to the twisted orientation by 90° of the major axes of the molecules of the liquid crystal layer. When an excitation voltage is applied between the first and second electrodes, the major axes of the molecules of the liquid crystal are all made parallel to an electric field caused by the applied voltage. This allows incident light to pass through the liquid crystal layer.

In such a liquid crystal display device, the optical path length difference (i.e. retardation) Δnd of the liquid crystal layer (that is, the product of the thickness d of the liquid crystal layer between the first and second electrodes (i.e. the thickness of the layer) and the double refraction index Δn of the liquid crystal layer) is set in such a manner that the transmission factor through the liquid crystal layer with no voltage applied to the electrodes is made a minimum. When the display screen utilising the device is observed from its front face, the second polarizing plate is viewed. This is normally not transmitting any light.

Japanese Published Unexamined Patent Application No. 62-180327 discloses a liquid crystal display panel in which the difference in the optical path length of its liquid crystal layer is made to be in a range from 0.7 µm to 0.9 µm and the difference in between the polarizing angle due to the polarizing plate and the rubbing angle is made to be in the range from 20° to 50°.

Japanese Published Unexamined Patent Application No. 62-240928 discloses a liquid crystal optical shutter in which the product of the thickness of its liquid crystal layer and the double refraction index of the liquid crystal layer is made to be not smaller than 0.18 µm and not larger than 0.4 µm.

Until now, in an arrangement for setting the optical path difference (i.e. retardation) Δnd of the liquid crystal layer which is used in the above-mentioned "normally black" type twisted nematic liquid crystal display device, the contrast ratio can be made a maximum when the display screen utilizing the device is observed from the front face, but the black level (colour of background) and the contrast ratio vary with the change in the visual angle. The liquid crystal layer must be made thin. Accordingly, even if small errors exist in the thickness of the layer, the contrast and the chromaticity will vary.

The technology disclosed in Japanese Published Unexamined Patent Application No. 62-180327 (see above) is applicable only to the so-called simple matrix-type liquid crystal display devices. The technology relates to a TN type liquid crystal display device using a bias rubbing method in which the twist of the axes of the molecules of its liquid crystal layer is not necessarily 90°, and the technology is not applicable to a "normally black" mode type twisted nematic liquid crystal display device. In a "normally black" mode twisted nematic liquid crystal display device, if the optical path difference Δnd is made to be from 0.7 µm to 0.9 µm, the leakage of light during interruption of the electric field is large, the absolute value of the contrast ratio is low, and the colour of the background varies depending on the visual angle. This does not allow this type of display device to be applied to normally black displays.

The technology described in Japanese Published Unexamined Patent Application No. 62-240928 (see above) is one for enhancing the optical response speed of a liquid crystal shutter, and it is not applicable to a liquid crystal display device having a large screen. In other words, in order for the optical path difference Δnd to be 0.18 µm to 0.4 µm, it is necessary for the thickness of the liquid crystal layer, that is, the thickness d of the cell to be 1.8 µm to 4 µm if the double refraction index Δn of the liquid crystal layer is 0.1. It is technically difficult to realize this thickness ranging over a large area, for example, in a range where errors must be within ±0.2 µm.

The object of the present invention is to provide a "normally black" type twisted nematic liquid crystal display device in which, when the visual angle is varied, the variation in its contrast and black level (colour of background) is relatively small, the variation in its contrast and colour is relatively small for a very small variation in the thickness of the liquid crystal layer, that is, the thickness of the cell, and, moreover, a sufficient contrast can be obtained.

The present invention relates to a twisted nematic liquid crystal display device comprising a first transparent electrode which has been subjected to orientation treatment in a first direction, a second transparent electrode which has been subjected to orientation treatment in a second direction, and a liquid crystal layer located between the first and second electrodes and affected by the electrode orientation treatment so that the molecules of the material of the liquid crystal layer lying adjacent to the first electrode are orientated in the first direction and the molecules of the material of the liquid crystal layer lying adjacent to the second electrode are oriented in the second direction, whereby the molecules within the liquid crystal layer are subjected to a twist angle of 90°. A first transparent polarising plate having a direction of polarisation coinciding with the first direction is located outside the first electrode and a second transparent polarising plate having a direction of polarisation also coinciding with the first direction is located outside the second electrode. The device also comprises a source of light and means for applying an excitation voltage between the two electrodes.
When no voltage is applied between the two electrodes light from the source incident on the first polarising plate is polarised in the first direction and on subsequently passing through the liquid crystal layer undergoes a rotation of polarisation into the second direction due to the twist of the molecules of the liquid crystal layer and does not pass through the second polarisation plate. When an excitation voltage is applied between the two electrodes the molecules of the material of the liquid crystal layer are re-oriented so as to lie parallel to the electric field and light incident on the first polarising plate does not undergo a rotation of polarisation on passing through the liquid crystal layer and passes out through the second polarising plate.

According to the invention the device is characterised in that the source of light has three distinct wavelengths and the optical path length difference (Δnd) of the liquid crystal layer, which is equal to the product of the thickness (d) of the liquid crystal layer and the double refraction index (Δn) of the liquid crystal layer (3) for all the wavelengths of the incident light, has a value, other than that at which the contrast ratio shows a peak, in the range 1.4 µm ≦ nd ≦ 1.7 µm thereby reducing the dependency of chromaticity on variations in the visual angle at which the display device is viewed.

In order that the invention may be more readily understood, an embodiment will now be described with reference to the accompanying drawings, in which:
Fig. 1 is an exploded perspective view of a "normally black" type twisted nematic liquid crystal display device to which no excitation voltage has been applied,
Fig. 2 is an exploded perspective view of a "normally black" type twisted nematic liquid crystal display device to which an excitation voltage has been applied,
Fig 3 is a graph showing the variation of the contrast ratio when the optical path difference in a liquid crystal display device as illustrated in Figs. 1 and 2 is varied,
Fig. 4 is a diagram of the chromaticity showing the variation in the black level with the normal direction set to 0° when the optical path difference in a liquid crystal display device as illustrated in Figs. 1 and 2 is varied,
Fig. 5A is a diagram of chromaticity showing the chromaticity of the black level with the visual angle set to 0°, 10°, 20°, 30°, and 40° right and left, and up and down, when the optical path difference is made to be 1.09 µm, 1.22 µm, and 1.29 µm in a liquid crystal display device as illustrated in Figs. 1 and 2,
Fig. 5B is a diagram of chromaticity showing the chromaticity of the black level with the visual angle set to 0°, 10°, 20°, 30°, and 40° right and left, and up and down respectively when the optical path difference is made to be 1.37 µm, 1.49 µm, and 1.64 µm in a liquid crystal display device as illustrated in Figs. 1 and 2,
Fig. 5C is a diagram of chromaticity showing the chromaticity of the black level with the visual angle set to 0°, 10°, 20°, 30° and 40° right and left, and up and down, when the optical path difference is made to be 1.72 µm, 1.78 µm, and 2.00 µm in a liquid crystal display device as illustrated in Figs. 1 and 2,
Fig. 6A is a diagram showing the contrast ratio with the visual angle ϑ set to 0°, 10°, 20°, 30°, and 40° right and left, when the optical path difference is made to be 1.09 µm, 1.22 µm, 1.29 µm, 1.37 µm, and 1.49µm in a liquid crystal display device as illustrated in Figs. 1 and 2,
Fig. 6B is a diagram showing the contrast ratio with the visual angle ϑ set to 0°, 10°, 20°, 30°, and 40° up and down when the optical path difference is made to be 1.09 µm, 1.22 µm, 1.29 µm, 1.37 µm, and 1.49 µm in a liquid crystal display device as illustrated in Figs. 1 and 2,
Fig. 6C is a diagram showing the contrast ratio with the visual angle ϑ set to 0°, 10°, 20°, 30°, and 40° right and left when the optical path difference is made to be 1.64 µm, 1.72 µm, 1.78 µm, and 2.00 µm in a liquid crystal display device as illustrated in Figs. 1 and 2, and
Fig. 6D is a diagram showing the contrast ratio with the visual angle ϑ set to 0°, 10°, 20°, 30°, and 40° up and down when the optical path difference is made to be 1.64 µm, 1.72 µm, 1.78 µm, and 2.00 µm in a liquid crystal display device as illustrated in Figs. 1 and 2.

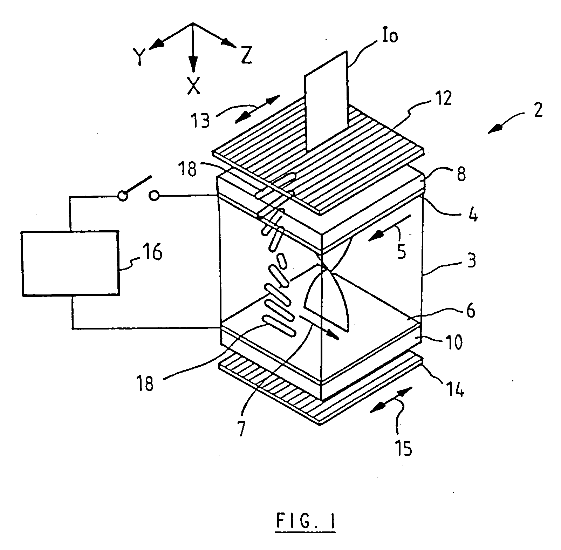

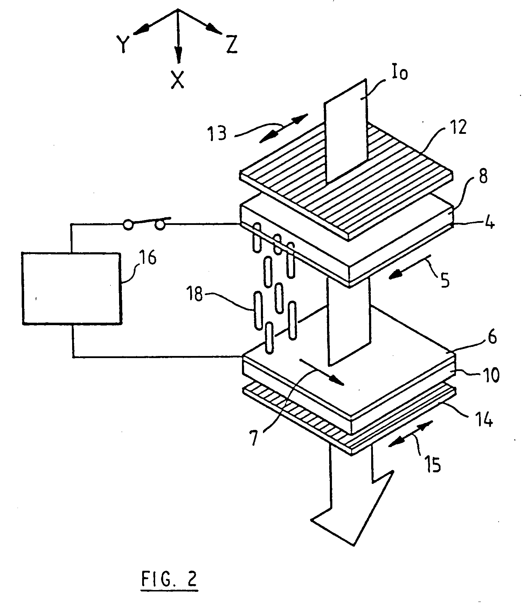

First, a "normally black" type twisted nematic liquid crystal display device will be described with reference to Fig. 1 and Fig. 2. In Fig. 1, a twisted nematic liquid crystal display device 2 includes a liquid crystal layer 3 having a positive dielectric anisotropy extending between a pair of transparent glass substrates 8 and 10 inside of which, respectively, transparent electrodes 4 and 6 are provided. Linearly polarizing plates 12 and 14 are provided outside the glass substrates 8 and 10, respectively. On the surface of the electrode 4, in the direction shown by an arrow 5, that is, in the Y-axis direction, for example, molecule orientation treatment, for example rubbing or the like, is performed, and on the surface of the electrode 6, in the direction shown by an arrow 7, that is, in the Z-axis direction perpendicular to the Y-axis direction, molecule orientation treatment, for example rubbing or the like, is performed. As a result of this orientation treatment, when no voltage is applied between the electrodes 4 and 6 from a voltage source 16, the major axes 18 of the molecules of the liquid crystal are oriented in the Y-axis direction on the interface contiguous with the electrode 4 and oriented in the Z-axis direction on the interface contiguous with the electrode 6. Accordingly, the axes of the molecules of the liquid crystal are oriented in a helical shape uniformly twisted by 90° between the electrodes 4 and 6 as illustrated. The directions of polarization 13 and 15 of the linearly polarizing plates 12 and 14 are both in the same Y-axis direction as the orientation treatment for the surface of the electrode 4.

When a voltage is not applied between the electrodes 4 and 6 from the voltage source 16 and the plane of polarization of an incident light beam I₀ matches the direction of polarization of the linearly polarizing plate 12, when the light beam I₀ passes through the liquid crystal layer 3 between the electrode 4 and the electrode 6, its plane of polarization is rotated, as illustrated, through an angle corresponding to the twisted orientation of the axes of the molecules of the liquid crystal and the light beam reaches the linearly polarizing plate 14 with its plane of polarization parallel to the direction 7, as shown in Fig. 1. Since the plane of polarization of the light beam I₀ is different from the plane of polarization of the linearly polarizing plate 14 by an angle of 90°, the light beam I₀ can not pass through the linearly polarizing plate 14, and a "dark state" is displayed for an observer located below the linearly polarizing plate 14.

When a voltage is applied between the electrodes 4 and 6 from the voltage source 16, as shown in Fig. 2, the major axes 18 of the molecules of the liquid crystal are changed to an orientation in parallel with an electric field formed between the electrodes 4 and 6 by the applied voltage. Under these conditions, the light beam I₀ reaches the linearly polarizing plate 14 without its plane of polarization being rotated and the plane of polarization of the light beam I₀ coincides with that of the linearly polarizing plate 14. Under these conditions, the light I₀ can pass through the linearly polarizing plate 14, and a "bright state" is displayed for the observer below the linearly polarizing plate 14.

Liquid crystal display devices having a thickness d of the liquid crystal layer 3 (hereinafter, it is abbreviated as the thickness of the cell) between the electrodes 4 and 6 of 8.3, 9.2, 9.8, 10.3, 11.3, 12.4, 13.0, 13.4, and 15.1 µm, respectively, have been manufactured using a twisted nematic (hereinafter, it is abbreviated as TN) liquid crystal (Merk ZLI3449-100) having its double refraction index Δn of 0.1325. The characteristics of these devices have been compared. If the thickness d of the cell is brought into such a range, the range of Δnd of the liquid crystal layer 3 becomes from 1.09 to 2.00 µm.

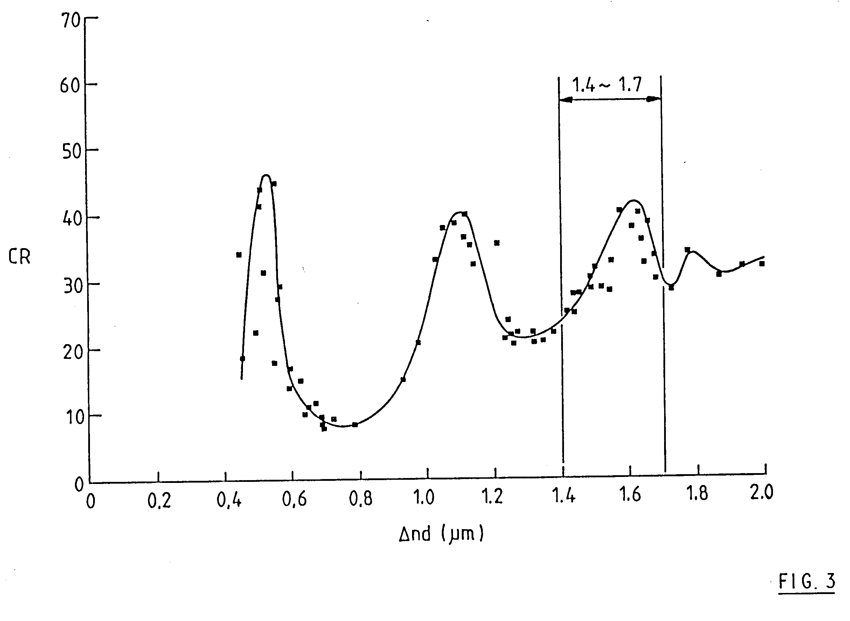

The surfaces of the electrodes 4 and 6 which are contiguous with the liquid crystal layer 3 were subjected to rubbing along the Y direction (direction 5) and the Z direction (direction 7), respectively.
For a back light for the transmission-type liquid crystal display device 2 a three wavelength type fluorescent lamp, which has peaks near the wavelengths of 435, 545, and 610 nm and a colour temperature of about 6000°K was used. A polarizing material having a neutral gray colour, with a transmission factor of about 40% and a polarization degree of not smaller than 99%, was employed for both polarizing plates 12 and 14. The chromaticity (black level colour) of the display screen with no voltage applied and the transmission factor vs voltage characteristic with the voltage (rectangular wave of 30 Hz, 5V) applied were measured to obtain a contrast ratio. Fig. 3 shows the relationship between the optical path difference Δnd and the contrast ratio (CR). In Fig. 3, the regions where Δnd is from 0.5 to 0.55 µm (primary cell), from 1.1 to 1.2 µm (secondary cell), and from 1.6 to 1.7 µm (tertiary cell) are values of Δnd which give maximum values to the contrast ratio. The conventional liquid crystal display device has values of Δnd corresponding to the primary cell and the secondary cell. The arrangement according to the present invention attempts to obtain the range of Δnd which provides an excellent dependence of chromaticity with variations in the visual angle and the stability of the thickness of the cell against a small variation rather than the maximization of the contrast ratio.

### Example of Experiment 1:

In a liquid crystal display device having a 8.3 µm thick cell (in this case, the value of Δnd is 1.09 µm), when the visual angle ϑ is varied variations of the contrast ratio and the chromaticity are as listed in Table 1.

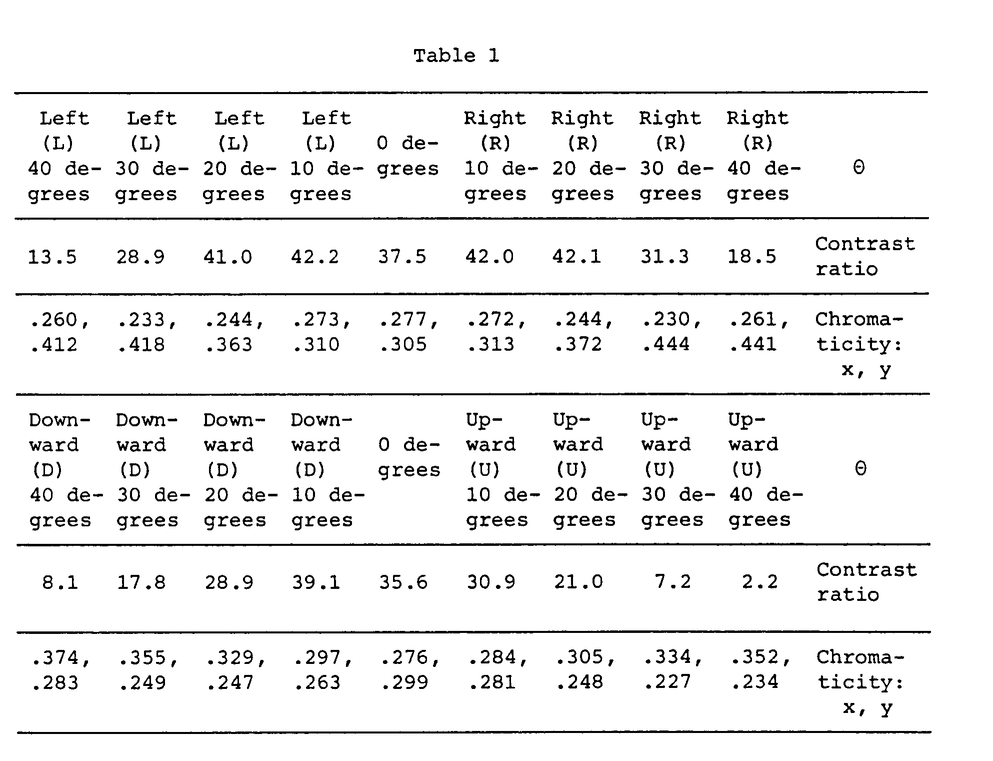

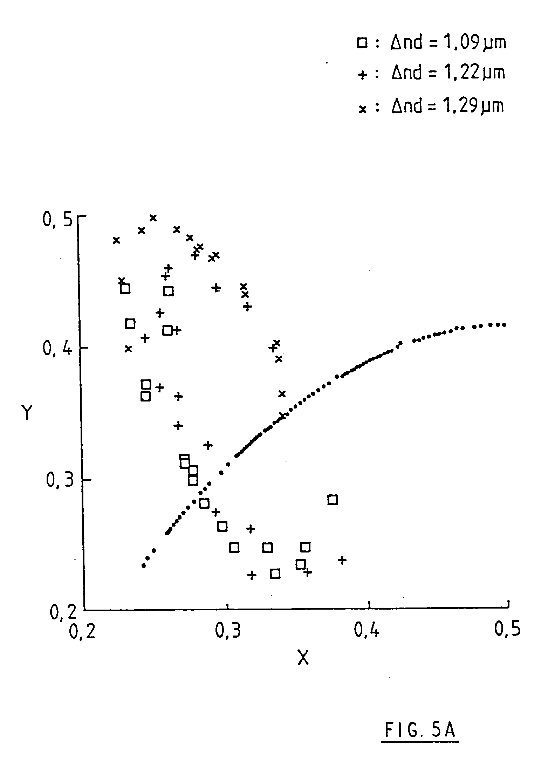

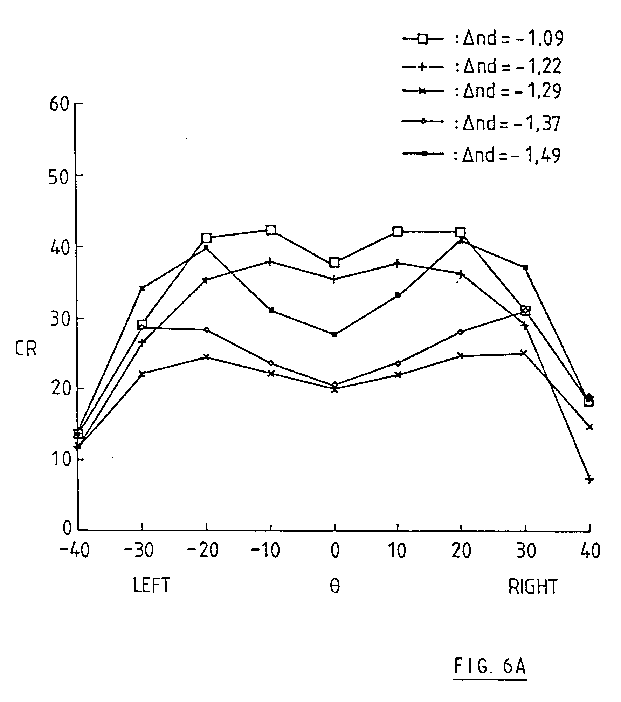

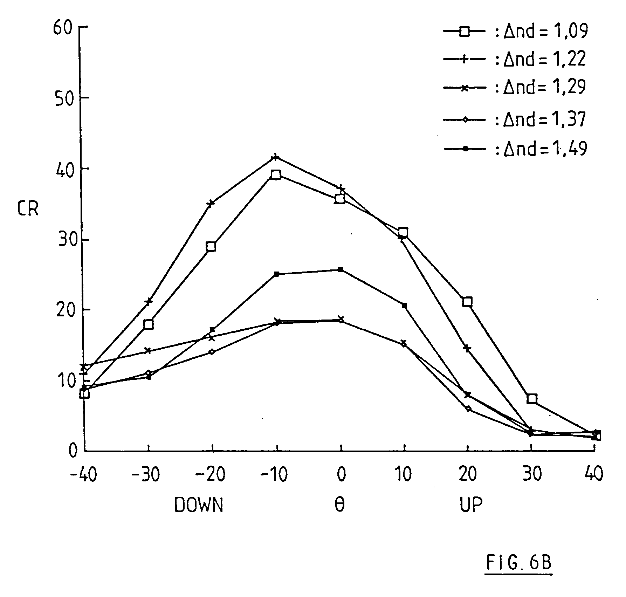

The contrast ratio can be made large in the area where the contrast ratio of the primary cell is maximum (refer to Fig. 3, Fig. 6A, and Fig. 6B). As evident from Fig. 5A, however, the dependence of a black level colour on a visual angle is large, and the colour varies depending upon the visual angle (from green to reddish violet, or vice versa).

### Example of Experiment 2:

In a liquid crystal display device having a 9.2 µm thick cell (the value of Δnd is 1.22 µm), when the visual angle ϑ is varied variations of the contrast ratio and the chromaticity are as listed in Table 2.

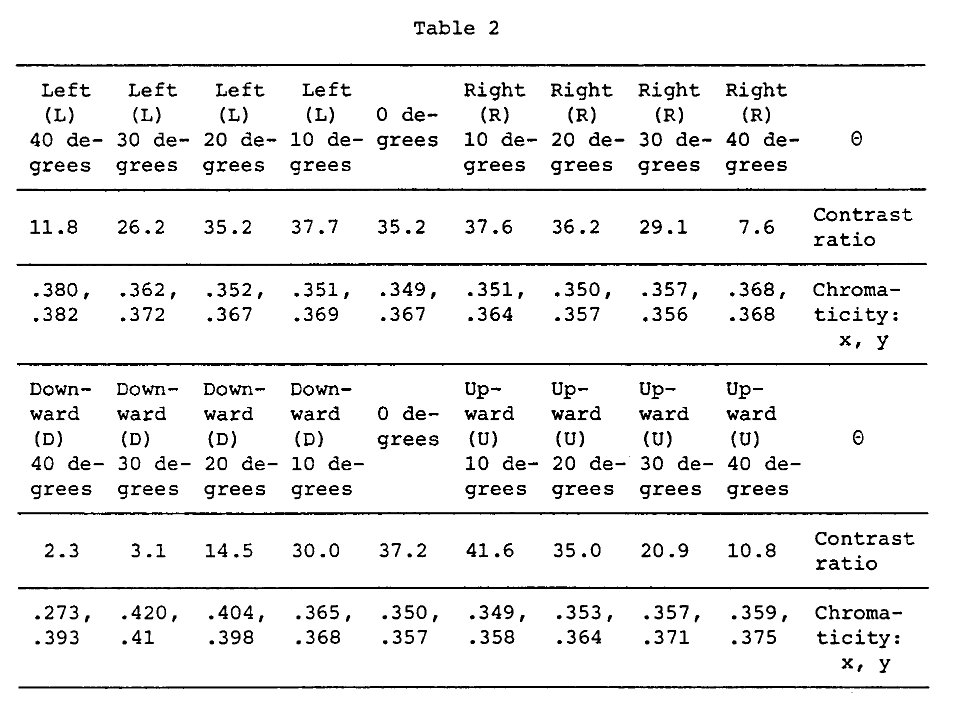

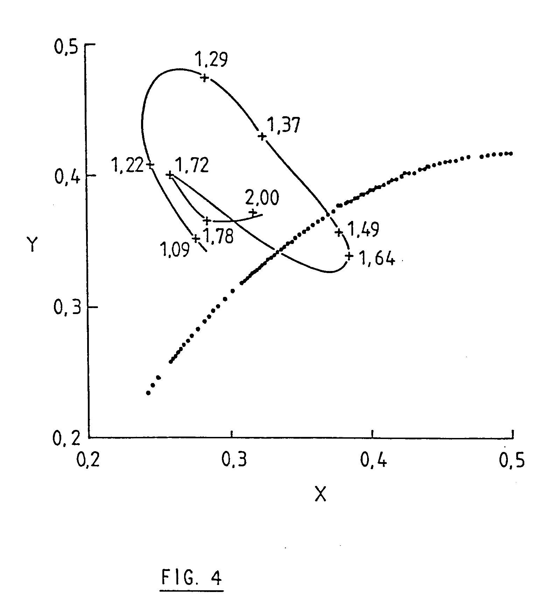

In this case, as in the 8.3 µm thick cell (see Experiment 1 above), the contrast ratio is large (refer to Fig. 3, Fig. 6A, and Fig. 6B). However, the chromaticity in the normal direction deviates from the locus of black body (region of achromatic colour), as represented by a series of dots in Fig. 4, and colouring is increased (refer to Fig. 4).

As apparent from Fig. 5A, the dependence of black level colour on a visual angle is bad, and variation in colour (from green to reddish violet, or vice versa) exists.

### Example of Experiment 3:

In a liquid crystal display device having a 9.8 µm thick cell (Δnd=1.29 µm), when the visual angle ϑ is varied variations of the contrast ratio and the chromaticity are as listed in Table 3.

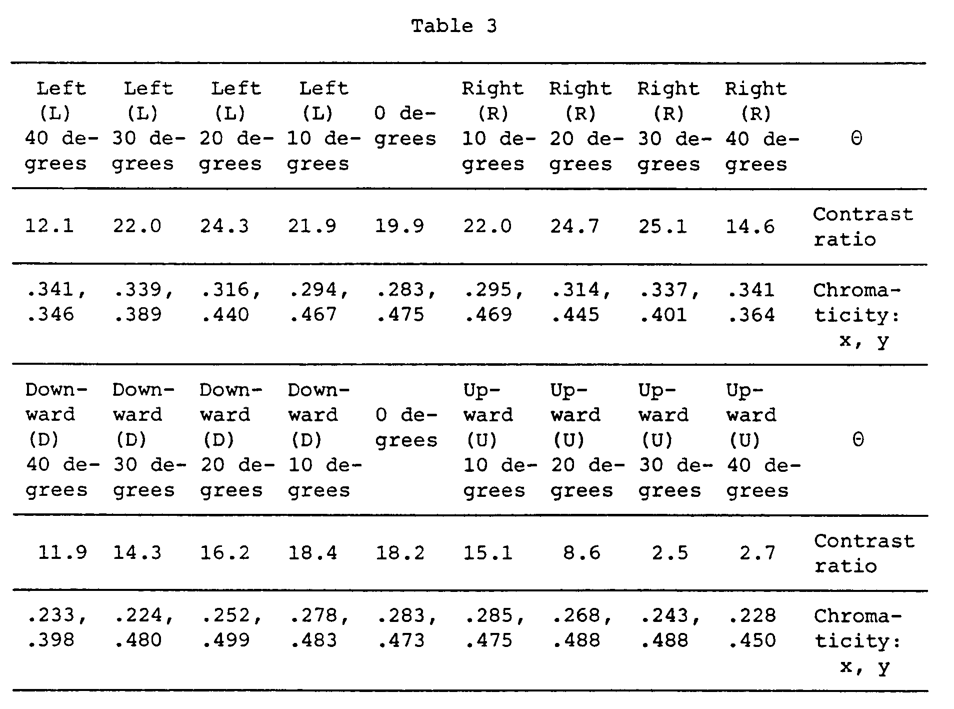

The variation in chromaticity of the black level is improved compared with the examples of Experiments 1 and 2 (refer to Fig. 5A). But, the absolute value of the contrast is as small as half or so of Δnd=1.09 µm (refer to Fig. 3, Fig. 6A, and Fig. 6B).

### Example of Experiment 4:

In a liquid crystal display device having a 10.3 µm thick cell (Δnd=1.37 µm), when the visual angle ϑ is varied variations of the contrast ratio and the chromaticity are as listed in Table 4.

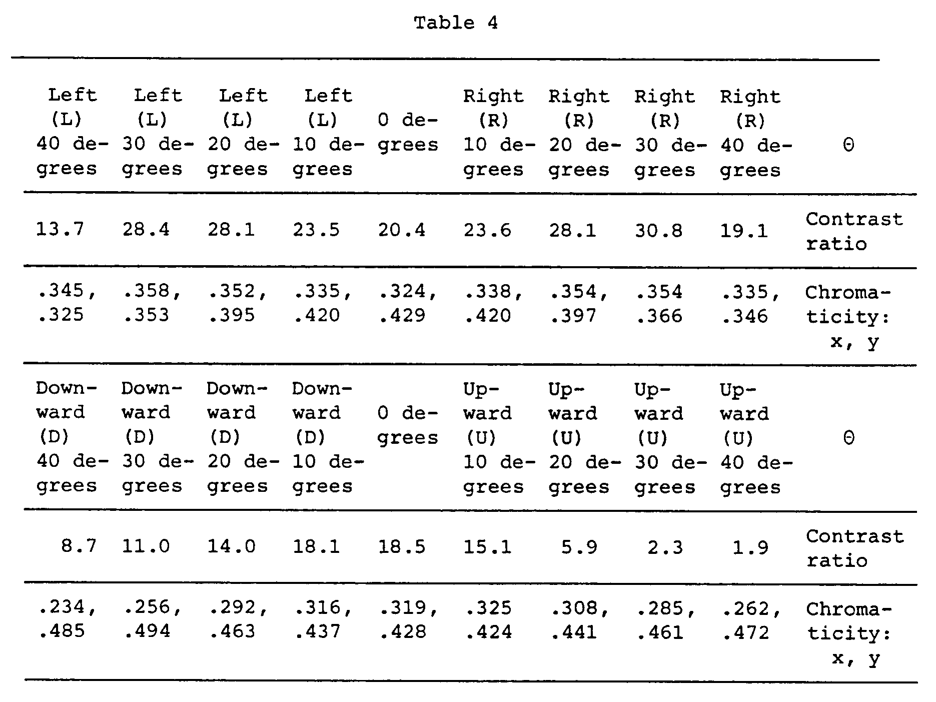

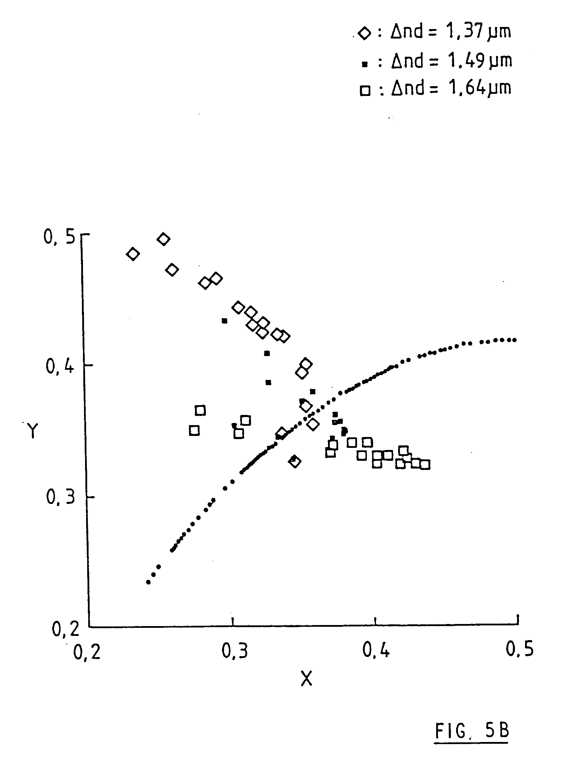

The variation in chromaticity of the black level is further improved (refer to Fig. 5B) and the chromaticity in the normal direction approaches achromatic colour (refer to Fig. 4). In this case, the absolute value of the contrast is still small (refer to Fig. 3, Fig. 6A, and Fig. 6B). But, as Δnd increases in Δnd = 1.4 µm, there is a tendency for the contrast to become large (refer to Fig. 3, Fig. 6A, and Fig. 6B). From the vicinity of this region, the visual angle characteristic becomes superior.

### Example of Experiment 5:

In a liquid crystal display device having a 11.3 µm thick cell (Δnd=1.49 µm), when the visual angle ϑ is varied variations of the contrast ratio and the chromaticity are as listed in Table 5.

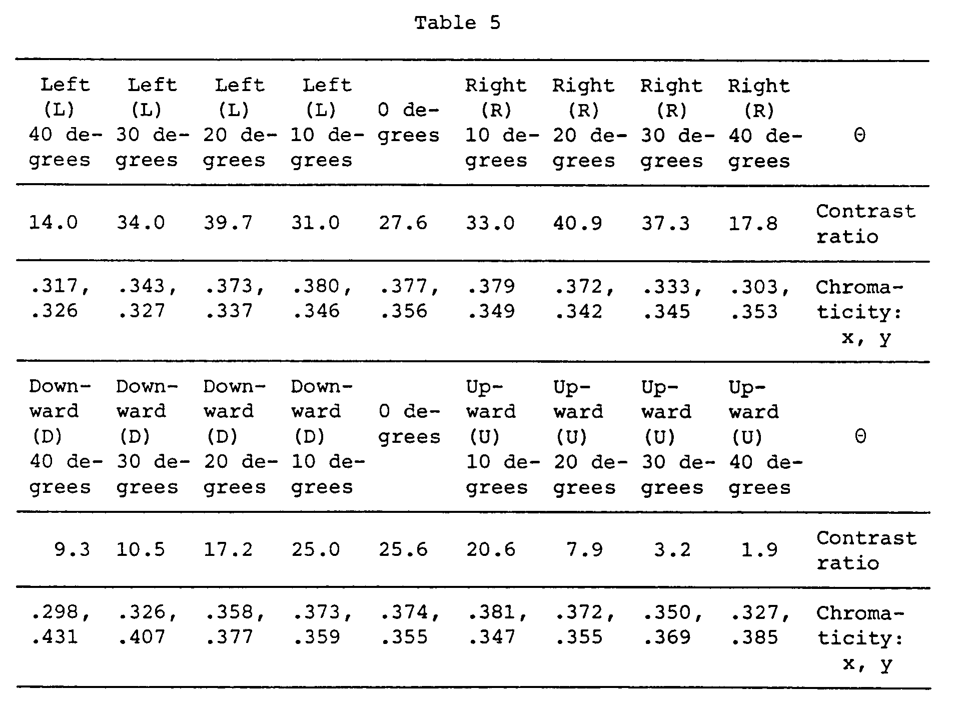

In this case, the variation in the chromaticity of the black level approaches the locus of the black body (as represented by a series of dots in Figs. 4 and 5B) and its dependence on the visual angle has been small (refer to Fig. 4 and Fig. 5B). The contrast ratio tends to rise, and is about 75% of the peak value (Δnd=1.09 µm), which is not considered to be inferior to the peak value. The background colour is stabilized in a reddish violet region.

### Example of Experiment 6:

In a liquid crystal display device having a 12.4 µm thick cell (Δnd=1.64 µm), when the visual angle ϑ is varied variations of the contrast ratio and the chromaticity are as listed in Table 6.

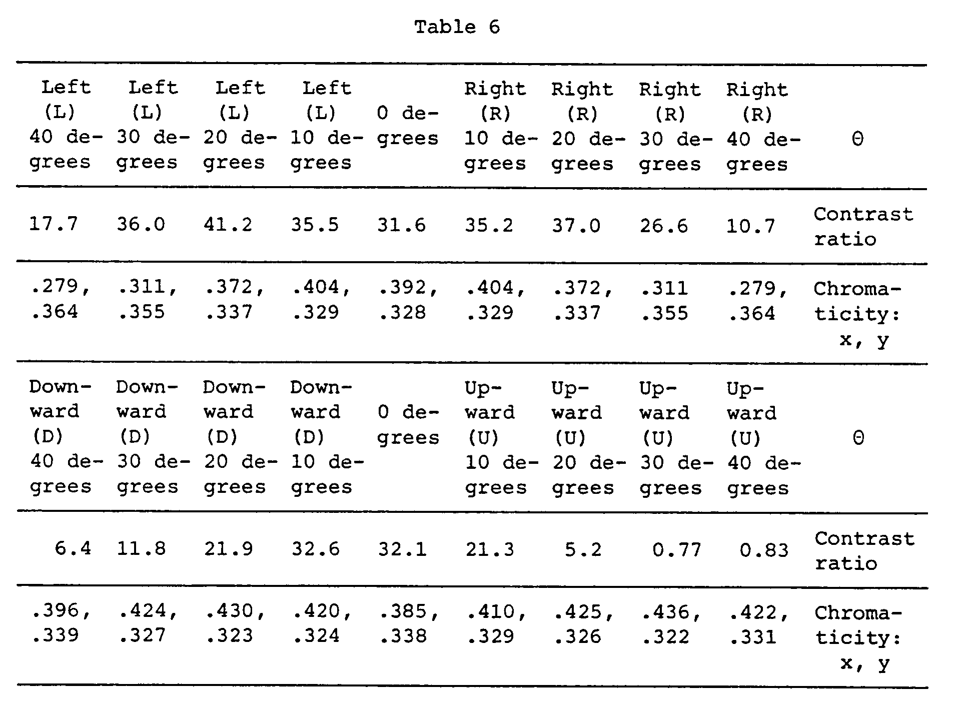

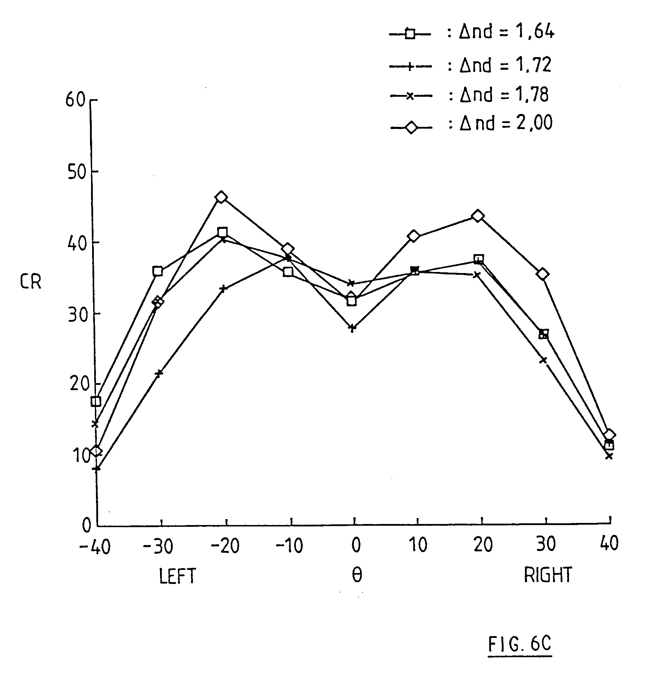

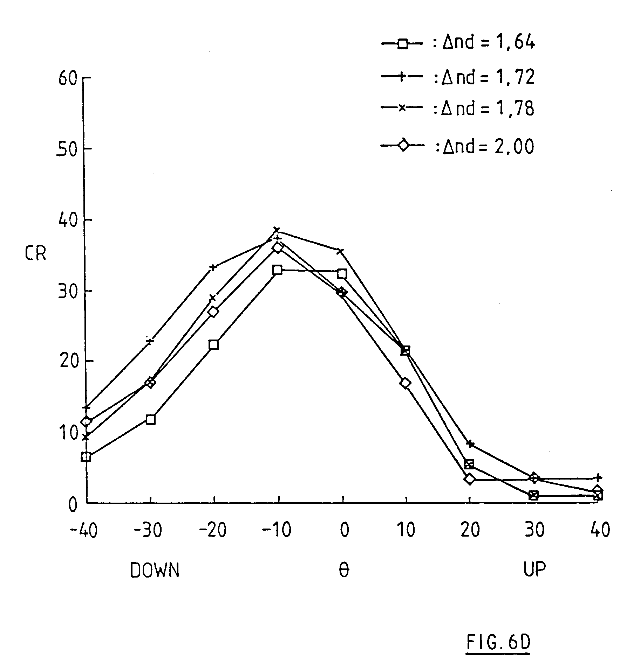

In this case, the chromaticity of the black level (normal direction) is near the locus of a black body, and its dependence on the visual angle becomes inclined to sandwich the locus of the black body and to spread on both sides of it (refer to Fig. 4 and Fig. 5B). The contrast ratio in this case is further improved (refer to Fig. 3, Fig. 6C, and Fig. 6D), and it is about 85% of the peak value (Δnd=1.09 µm), which is not considered to be inferior to the peak value. The background colour is reddish violet and comparatively stable.

### Example of Experiment 7:

In a liquid crystal display device having a 13.0 µm thick cell (Δnd=1.72 µm), when the visual angle ϑ is varied variations in the contrast ratio and the chromaticity are as listed in Table 7.

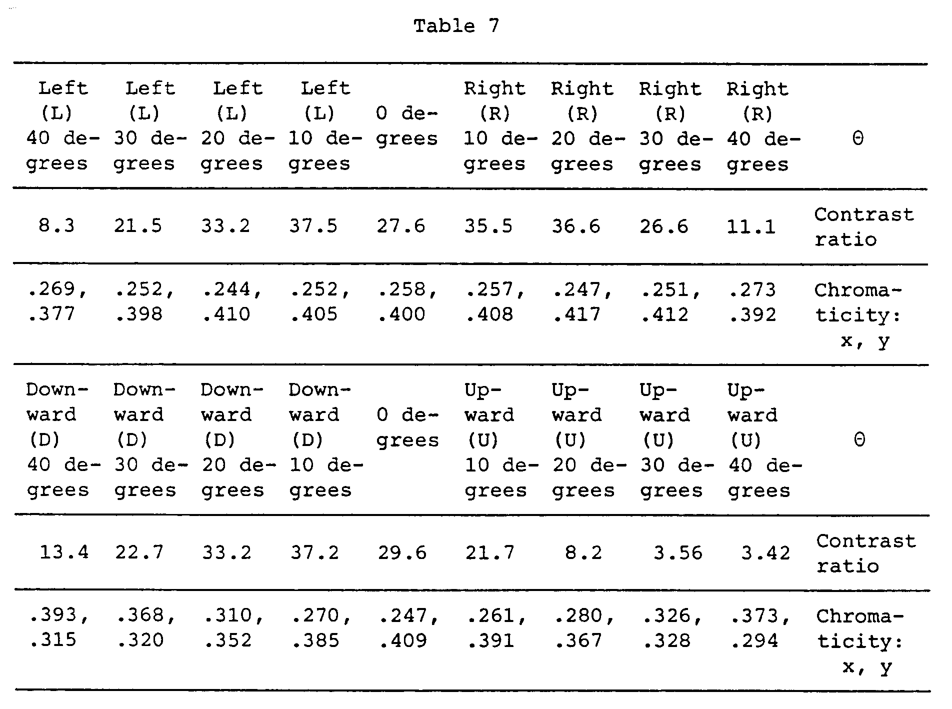

In this case, the chromaticity (normal direction) of the black level tends to move away from the vicinity of the locus of the black body (refer to Fig. 4). The absolute value of the contrast is lower compared with the example of the Experiment 6 and the dependence of the chromaticity on the visual angle is lower compared with the example of the Experiment 6, and especially the visual angle on the left side narrows (refer to Fig. 6C). The background colour is around green, and varies to reddish violet depending on the visual angle.

### Example of Experiment 8:

In a liquid crystal display device having a 13.4 µm thick cell (Δnd=1.78 µm), when the visual angle ϑ is varied variations of the contrast ratio and the chromaticity are as listed in Table 8.

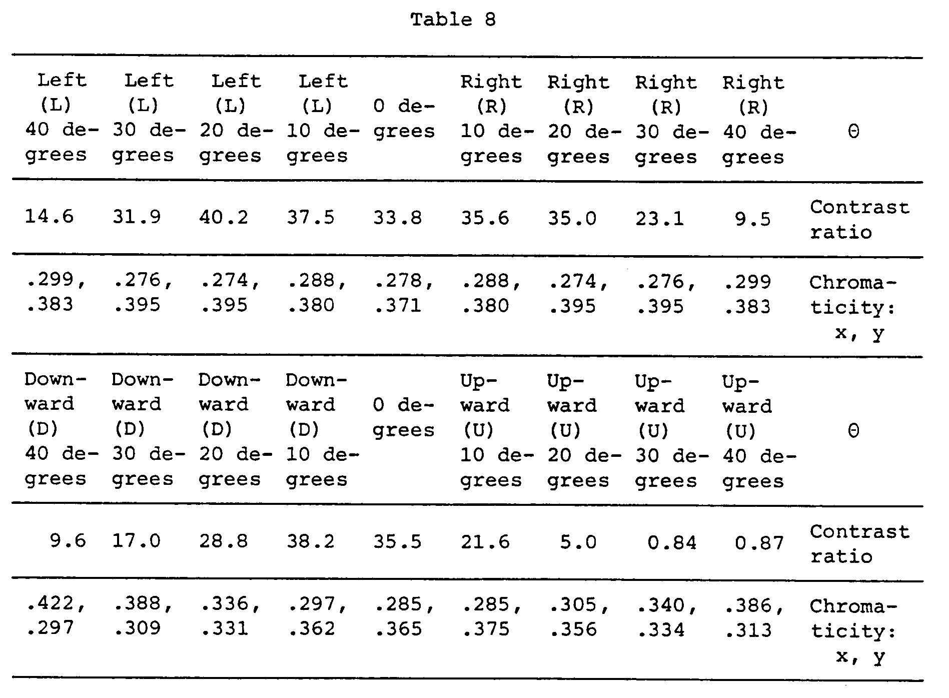

In this case, the chromaticity of the black level (normal direction) tends to be approach the locus of the black body (refer to Fig. 4), and the value of the contrast is not inferior (refer to Fig. 6D). The background colour is around dark green, and it varies to reddish violet when the visual angle is large. Since the optical response speed of a liquid crystal is increased in proportion to the square of the thickness d of a cell (response is slow), in view of a thin cell being better, the advantage decreases when the chromaticity goes outside the region specified.

### Example of Experiment 9:

In a liquid crystal display device having a 15.1 µm thick cell (Δnd=2.00 µm), when the visual angle ϑ is varied variations of the contrast ratio and the chromaticity are as listed in Table 9.

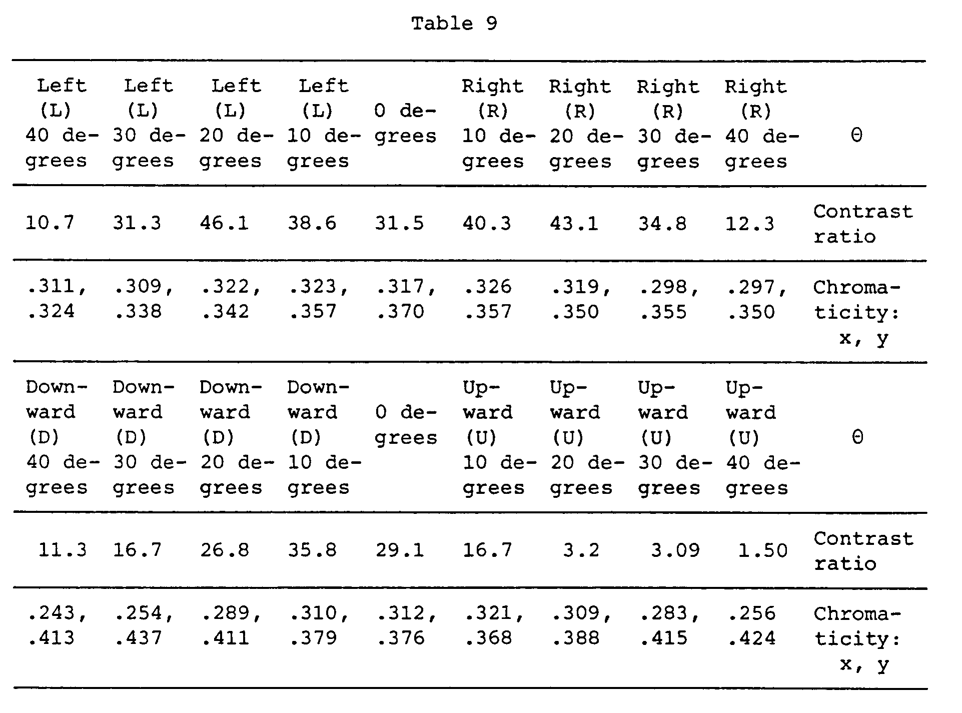

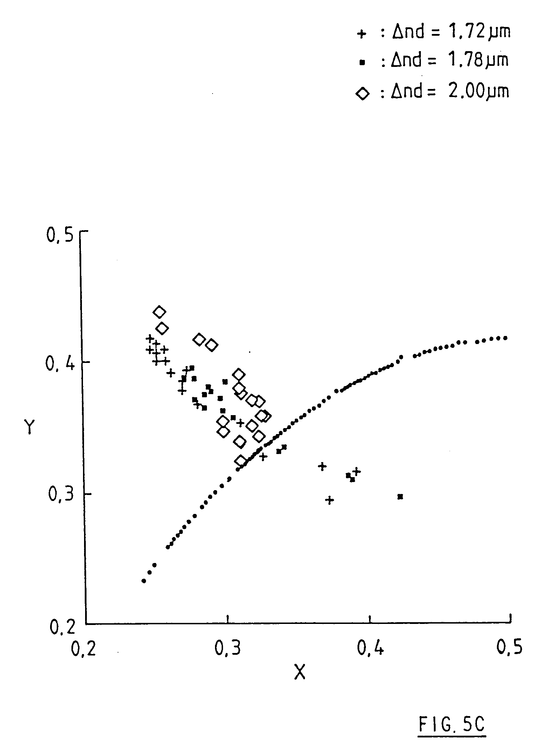

In this case, the chromaticity of the black level tends to approach the locus of the black body closer than in the example of the Experiment 8 (refer to Fig. 4), and the dependence thereof on the visual angle is small (Fig. 5C). However, the dependence of the contrast on the visual angle is large, and especially the value of the contrast when the visual angle increases in the upward direction is apparently lower (refer to Fig. 3, Fig. 6C, and Fig. 6D). Also, because the thickness of the cell d is large, there is no advantage from the viewpoint of the response speed.

In the example of the Experiment 4 (Δnd=1.37 µm), the chromaticity in the normal direction approaches achromatic colour, and the contrast ratio tends to increase with increase of Δnd. The contrast is low for Δnd=1.4 µm or less, and the variation in the chromaticity (dependence of the chromaticity on the visual angle) is large for Δnd=1.1 µm at which the contrast ratio shows a peak value. Accordingly, the value Δnd=1.4 µm is set to be a low limit. When Δnd is not less than 1.4 µm and not more than 1.7 µm, the background colour is stabilized at a reddish violet, the dependence of the chromaticity on the visual angle is small, and the chromaticity in the normal direction is near achromatic colour. Also, since the contrast is comparatively large (contrast ratio is not less than 20:1), a "normally black" type liquid crystal display device that is not inferior to the peak can be obtained. Where the value of Δnd exceeds 1.7 µm, the chromaticity in the normal direction moves away from the locus of the black body, and the variation in chromaticity is large in comparison with the thickness of the cell. There is a disadvantage in that the background colour varies from green to reddish violet depending on the visual angle. The contrast ratio is comparatively stable, with the increase of Δnd, and the characteristic of the visual angle as it increases in the upward direction deteriorates. In addition, a thinner cell is desirable from the viewpoint of response speed. From this viewpoint, the advantage is small if Δnd exceeds 1.7 µm.

In the above-mentioned examples, the thickness d of the cell is varied with the double refraction index Δn set to 0.1325 constant. However, even if the double refraction index Δn of the liquid crystal layer is varied with the thickness d set to a constant, or both the thickness d of the cell and the double refraction index Δn are varied, the same effect is obtained.

As apparent from the above-mentioned description, since the "normally black" type twisted nematic liquid crystal display devices described make the optical path difference, that is, the product of the thickness d of the liquid crystal layer (thickness of the cell) and the double refraction index Δn of the liquid crystal layer concerned not less than 1.4 µm and not more than 1.7 µm, each display device has the following advantages:
(a) The black level (background colour) is stable against variation in the visual angle, and the background colour in the normal direction is near achromatic colour (In this range, the background colour is reddish violet).
(b) A sufficient contrast ratio can be obtained (about 20:1 or more in the normal direction), and the visual angle is comparatively wide.
(c) The cell has a thickness (≅ 10 µm) which is easy to control to a certain degree, and the contrast and the chromaticity are stable against a very small variation in the thickness of the cell (this is especially advantageous in a large screen display device).
(d) As to the response speed, a sufficiently satisfactory speed as a display can be achieved if the Δn of the liquid crystal material is made large and the thickness of the cell d is made small.

## Claims

1. A twisted nematic liquid crystal display device (2) comprising
a first transparent electrode (4) which has been subjected to orientation treatment in a first direction (5),
a second transparent electrode (6) which has been subjected to orientation treatment in a second direction (7),
a liquid crystal layer (3) located between said first and second electrodes and affected by said electrode orientation treatment so that the molecules of the material of said layer lying adjacent to said first electrode are orientated in said first direction and the molecules of the material of said layer lying adjacent to said second electrode are oriented in said second direction whereby said molecules within said layer (3) are subjected to a twist angle of 90°,
a first transparent polarising plate (12) having a direction of polarisation (13) coinciding with said first direction (5) and located outside said first electrode,
a second transparent polarising plate (14) having a direction of polarisation (15) also coinciding with said first direction (5) and located outside said second electrode,
a source of light (Iₒ) and
means for applying an excitation voltage between said two electrodes (4, 6),
the device being constructed such that
when no voltage is applied between said two electrodes (4, 6) light from said source (Iₒ) incident on said first polarising plate (12) is polarised in said first direction (5) and on subsequently passing through said layer (3) undergoes a rotation of polarisation into said second direction due to the twist of the molecules of said layer (3) and does not pass through said second polarisation plate (14), and
when an excitation voltage is applied between said two electrodes (4, 6), the molecules of the material of said layer (3) are re-orientated so as to lie parallel to the electric field and light (Iₒ) incident on said first polarising plate (12) does not undergo a rotation of polarisation on passing through said layer (3) and passes out through said second polarising plate (14),
characterised in that
said source of light (Iₒ) has three distinct wavelengths, and
the optical path length difference (Δnd) of said liquid crystal layer (3), which is equal to the product of the thickness (d) of the liquid crystal layer and the double refraction index (Δn) of the liquid crystal layer (3) for all said wavelengths of said incident light (Iₒ), has a value, other than that at which the contrast ratio shows a peak, in the range 1.4 µm ≦ Δnd ≦ 1.7 µm, thereby reducing the dependency of chromaticity on variations in the visual angle at which the display device is viewed.

2. A display device as claimed in Claim 1 characterised in that said source of light (Iₒ) has distinct wavelengths of 435, 545 and 610 nm.

3. A display device as claimed in Claim 2 characterised in that the colour temperature of said source of light (Iₒ) is approximately 6000°K.

## Patentansprüche

1. Eine verdrillt-nematische Flüssigkristall-Anzeigevorrichtung (2), die folgendes umfaßt:
eine erste transparente Elektrode (4), die einer Ausrichtung in eine erste Richtung (5) unterzogen wurde,
eine zweite transparente Elektrode (6), die einer Ausrichtung in eine zweite Richtung (7) unterzogen wurde,
eine Flüssigkristallschicht (3), die sich zwischen der genannten ersten und zweiten Elektrode befindet und durch die genannte Elektrodenausrichtung insofern beeinflußt wird, als die Moleküle des Materials der genannten Schicht, die neben der genannten ersten Elektrode liegt, in die genannte erste Richtung ausgerichtet werden, und die Moleküle des Materials der genannten Schicht, die neben der genannten zweiten Elektrode liegt, werden in die genannte zweite Richtung ausgerichtet, wobei die genannten Moleküle innerhalb der genannten Schicht (3) einem Verdrillungswinkel von 90° ausgesetzt werden,
eine erste transparente Polarisationsscheibe (12) mit einer Polarisationsrichtung (13), die mit der genannten ersten Richtung (5) zusammentrifft und außerhalb der ersten Elektrode liegt,
eine zweite transparente Polarisationsscheibe (14) mit einer Polarisationsrichtung (15), die ebenfalls mit der genannten ersten Richtung (5) zusammentrifft und außerhalb der zweiten Elektrode liegt,
eine Lichtquelle (Iₒ) und
ein Mittel zum Anlegen einer Erregerspannung zwischen den genannten beiden Elektroden (4, 6),
wobei die Vorrichtung so aufgebaut ist, daß,
wenn zwischen den beiden Elektroden (4, 6) keine Spannung angelegt ist, Licht von der Quelle (Iₒ), das auf die genannte erste Polarisationsscheibe (12) auftrifft, in die genannte erste Richtung (5) polarisiert wird, und das beim nachfolgenden Durchlaufen der genannten Schicht (3) eine Polarisationsrotation in die genannte zweite Richtung durchläuft, die auf die Verdrillung der Moleküle der genannten Schicht (3) zurückzuführen ist und nicht durch die genannte zweite Polarisationsscheibe (14) läuft, und,
wenn zwischen den beiden genannten Elektroden (4, 6) eine Erregerspannung angelegt wird, die Moleküle des Materials der genannten Schicht (3) ihre Ausrichtung ändern, so daß sie parallel zum elektrischen Feld liegen und Licht (Iₒ), das auf die erste Polarisationsscheibe (12) auftrifft, beim Durchlaufen der genannten Schicht (3) keiner Polarisationsrotation ausgesetzt wird und aus der genannten zweiten Polarisationsscheibe (14) austritt,
dadurch charakterisiert, daß
die genannte Lichtquelle (Iₒ) drei unterschiedliche Wellenlängen aufweist, und
die optische Pfadlängendifferenz (Δnd) der genannten Flüssigkristallschicht (3), die gleich dem Produkt aus der Dicke (d) der Flüssigkristallschicht und dem doppelten Refraktionsindex (Δnd) der Flüssigkristallschicht (3) bei allen genannten Wellenlängen des genannten auftreffenden Lichts (Iₒ) ist, einen Wert aufweist, der von dem, bei dem das Kontrastverhältnis im Bereich zwischen 1,4 µm ≦ Δnd ≦ 1,7 µm eine Spitze hat, abweicht, wodurch die Abhängigkeit der Chromatizität von Abweichungen im Blickwinkel, mit dem die Anzeigevorrichtung betrachtet wird, reduziert wird.

2. Eine Anzeigevorrichtung gemäß Anspruch 1, dadurch charakterisiert, daß die Lichtquelle (Iₒ) unterschiedliche Wellenlängen von 435, 545 und 610 nm aufweist.

3. Eine Anzeigevorrichtung gemäß Anspruch 2, dadurch charakterisiert, daß die Farbtemperatur der genannten Lichtquelle (Iₒ) ungefähr 6000°K beträgt.

## Revendications

1. Visuel à cristaux liquides nématiques (2) comprenant :
une première électrode transparente (4) qui a été soumise à un traitement d'orientation dans une première direction (5);
une deuxième électrode transparente (6) qui a été soumise à un traitement d'orientation dans une deuxième direction (7);
une couche de cristaux liquides (3) placée entre ladite première et ladite deuxième électrodes et affectée par ledit traitement d'orientation d'électrodes de sorte que les molécules du corps de ladite couche adjacentes à ladite première électrode sont orientées dans ladite première direction et que les molécules du corps de ladite couche adjacentes à ladite deuxième électrode sont orientées dans ladite deuxième direction, caractérisée en ce que les dites molécules au sein de ladite couche (3) sont soumises à un angle de torsion de 90°;
une première plaque polarisante transparente (12), dont le sens de polarisation (13) coïncide avec ladite première direction (5), placée à l'extérieur de ladite première électrode;
une deuxième plaque polarisante transparente (14), dont le sens de polarisation (13) coïncide également avec ladite première direction (5), placée à l'extérieur de ladite deuxième électrode;
une source lumineuse (Iₒ); et
un dispositif pour appliquer une tension d'excitation entre les dites deux électrodes (4, 6);
le visuel étant conçu de sorte que,
lorsqu'aucune tension n'est appliquée entre les dites deux électrodes (4, 6), la lumière provenant de ladite source (Iₒ) reçue sur ladite première plaque polarisante (12) est polarisée dans ladite première direction (5) et, lorsqu'elle traverse ensuite ladite couche (3), subie une rotation de polarisation dans ladite deuxième direction due à la torsion des molécules de ladite couche (3), et ne traverse pas ladite deuxième plaque polarisante (14); et,
lorsqu'une tension d'excitation est appliquée entre les dites deux électrodes (4, 6), les molécules du corps de ladite couche (3) sont réorientées en sorte d'être placées parallèlement au champ électrique et en sorte que la lumière (Iₒ) reçue sur ladite première plaque polarisante (12) ne subisse pas de rotation de polarisation lorsqu'elle traverse ladite couche (3) et ressorte en traversant ladite deuxième plaque polarisante (14);
et étant caractérisé en ce que
ladite source lumineuse (Iₒ) a trois longueurs d'onde distinctes, et
la différence de trajet optique (Δnd) de ladite couche de cristaux liquides (3), qui est égale au produit de l'épaisseur (d) de la couche de cristaux liquides et de l'indice de biréfringence (Δn) de la couche de cristaux liquides (3) pour toutes les dites longueurs d'onde de ladite lumière incidente (Iₒ), a une valeur, différente de celle à laquelle le rapport de contraste est caractérisé par une pointe, située dans la plage 1,4µm ≦ Δnd ≦ 1,7µm, ce qui permet de réduire la dépendance de la chromaticité à des variations dans l'angle de visualisation du visuel.

2. Visuel selon a revendication 1, caractérisé en ce que ladite source lumineuse (Iₒ) a des longueurs d'onde distinctes de 435, 545 et 610 nm.

3. Visuel selon la revendication 2, caractérisé en ce que la température de couleur de ladite source lumineuse (Iₒ) est d'environ 6.000°K.
